# EUROPÄISCHE PATENTSCHRIFT

(11) **EP 0 810 360 B1**
(45) Veröffentlichungstag und Bekanntmachung des Hinweises auf die Patenterteilung: **26.03.2003**
(21) Anmeldenummer: 96119761.3
(22) Anmeldetag: 10.12.1996
(51) Int. Cl.: F02D 21/08, F02D 11/10

(54) **System zur Steuerung einer Brennkraftmaschine**
System for controlling a combustion engine
Système de contrôle de moteur à combustion

(30) Priorität: 17.05.1996 DE 19620039
(43) Veröffentlichungstag der Anmeldung: 03.12.1997
(73) Patentinhaber: ROBERT BOSCH GMBH, 70442 Stuttgart (DE)
(72) Erfinder: Birk, Manfred, Dipl.-Ing., 71739 Oberriexingen (DE); Leuz, Marcus, Dipl.-Ing. (FH), 74214 Schöntal-Oberkessach (DE)

(56) Entgegenhaltungen:
- GB-A- 2 083 657
- US-A- 4 467 775
- US-A- 4 727 848

## Beschreibung

### Stand der Technik

Die Erfindung betrifft ein System zur Steuerung einer Brennkraftmaschine gemäß dem Oberbegriff des unabhängigen Anspruchs.

Ein solches System zur Steuerung einer Brennkraftmaschine ist beispielsweise aus der DE-OS 42 28 279 bekannt. Dort werden ein Verfahren und eine Vorrichtung beschrieben, bei denen die der Brennkraftmaschine zugeführte Frischluftmenge und/oder die Menge an rückgeführtem Abgas mittels einer Drosselklappe in der Ansaugleitung bzw. mit einem die Abgasrückführrate bestimmenden Stellglied beeinflußbar ist.

Bei einem solchen System ist es wichtig, daß die Regelungen bzw. Steuerungen, die die beiden Stellglieder mit Signalen beaufschlagen, aufeinander abgestimmt sind.

Der Erfindung liegt die Aufgabe zugrunde, bei einem System zur Steuerung einer Brennkraftmaschine der eingangs genannten Art die Steller, die die Abgasrückführrate bzw. die angesaugte Luftmenge beeinflussen, optimal anzusteuern.

### Vorteile der Erfindung

Mit der erfindungsgemäßen Vorgehensweise können die beiden Steller optimal angesteuert werden.

### Zeichnung

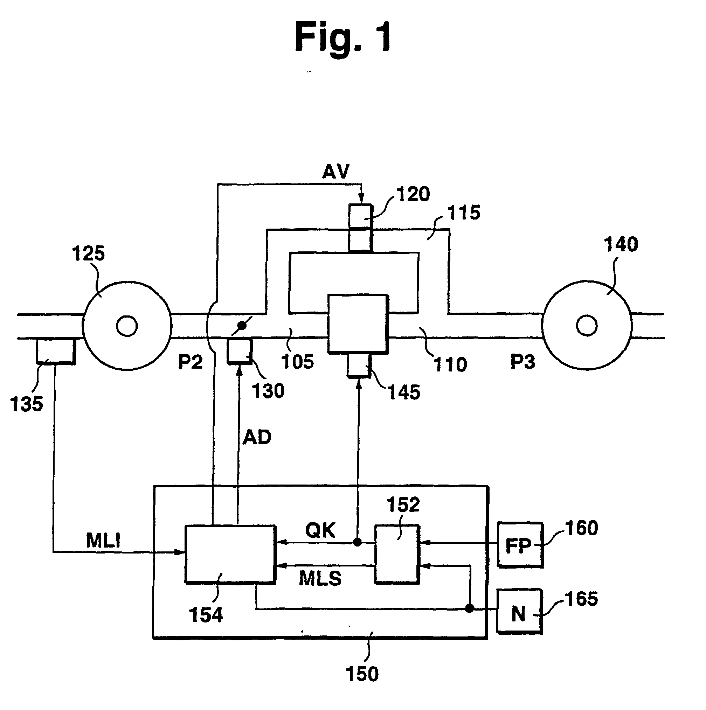

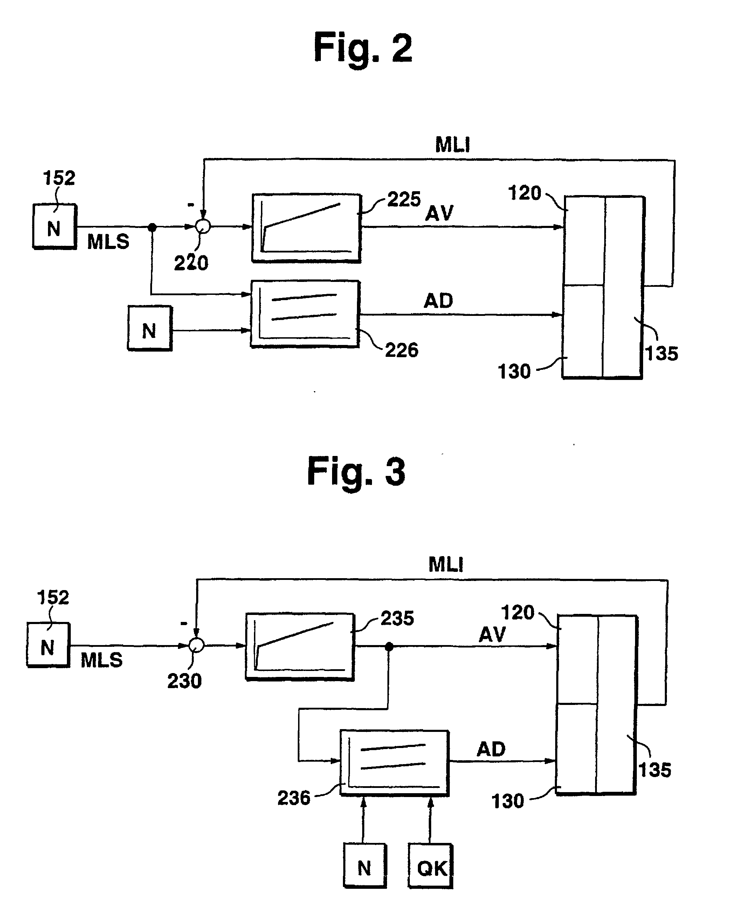

Die Erfindung wird nachstehend anhand der in der Zeichnung dargestellten Ausführungsformen erläutert. Es zeigen Figur 1 eine schematische Darstellung der erfindungsgemäßen Vorrichtung und die Figuren 2 bis 5 verschiedene Ausgestaltungen der Abgasrückführsteuerung.

### Beschreibung der Ausführungsbeispiele

In Figur 1 ist die Vorrichtung zur Steuerung einer Brennkraftmaschine 100 dargestellt. Die Luft gelangt über eine Zuführleitung 105 zur Brennkraftmaschine 100. Über eine Abgasleitung 110 gibt sie Abgase ab. Eine Rückführleitung 115 verbindet die Abgasleitung 110 mit der Zuführleitung 105. In der Rückführleitung ist ein Abgasrückführventil 120 angeordnet, das die Menge an rückgeführtem Abgas beeinflußt und als erstes Stellglied bezeichnet wird.

In der Zuführleitung kann ein Verdichter 125 angeordnet sein, der die zugeführte Luft verdichtet. Der Verdichter 125 wird von einer in der Abgasleitung 110 angeordneten Turbine 140 angetrieben. Mittels eines Drosselklappenstellers 130, der eine Drosselklappe ansteuert, wird die angesaugte Frischluftmenge variiert. Der Drosselklappensteller 130 wird auch als zweites Stellglied bezeichnet.

Die Menge an zugeführter Frischluft MLI wird mittels eines Sensors 135 erfaßt, der auch als Luftmengenmesser bezeichnet wird.

Eine Steuerung 150 beaufschlagt den Drosselklappensteller 130 mit einem Ansteuersignal AD, einen Kraftstoffmengensteller 145 mit einem Signal QK und das Abgasrückführventil 120 mit einem Signal AV. Das Abgasrückfuhrventil beinhaltet einen elektropneumatischen Wandler, der das Ansteuersignal AV in eine pneumatische Kraft und damit in eine bestimmte Stellung des Stellglieds 120 umsetzt. Die Steuerung 150 wertet die Ausgangssignale eines Drehzahlsensors 165, eines Fahrpedalstellungsgebers 160, des Luftmengenmessers 135 und ggf. weitere Signale von weiteren Sensoren, beispielsweise eines Fahrpedalstellungsgebers 160, aus.

Das Ausgangssignal FP des Fahrpedalstellungsgebers 160 und das Drehzahlsignal N des Drehzahlgebers 165 werden von einer Kraftstoffmengensteuerung 152 verarbeitet, die dann den Kraftstoffmengensteller 145 mit dem Ansteuersignal QK beaufschlagt. Ferner gibt die Kraftstoffmengensteuerung 152 ein Signal MLS bezüglich des Sollwertes für die Luftmenge sowie das Kraftstoffmengensignal QK an eine Agasrückführsteuerung 154 weiter. Die Abgasrückführsteuerung 154 verarbeitet ferner das Ausgangssignal MLI des Luftmengenmessers 135. Die Abgasrückführsteuerung 154 stellt das Signal AV und das Signal AD zur Verfügung.

Diese Einrichtung arbeitet nun wie folgt: Die über die Zuführleitung 105 zugeführte Frischluft wird von dem Verdichter 125 verdichtet. Mittels des Drosselklappenstellers 130 kann die Drosselklappe derart angesteuert werden, daß die zugeführte Luftmenge gedrosselt bzw. ungedrosselt zur Brennkraftmaschine 100 gelangt. Die Abgase, die über die Abgasleitung 110 abgeführt werden, treiben die Turbine 140 an, die wiederum den Verdichter 125 antreibt.

Ein Teil des Abgases gelangt über die Rückführleitung 115 in die Zuführleitung 105. Mittels des Abgasrückführventils 120 ist der Querschnitt dieser Rückführleitung veränderbar und damit ist der Anteil der rückgeführten Abgasmenge einstellbar.

Die Kraftstoffmengensteuerung 152 berechnet ausgehend vom Fahrerwunsch FP, der beispielsweise mittels des Fahrpedalstellungsgebers 160 erfaßt wird, der Drehzahl N und ggf. weiteren Betriebskenngrößen ein Ansteuersignal QK, das die einzuspritzende Kraftstoffmenge festlegt. Mit diesem Signal wird der Kraftstoffmengensteller 145 angesteuert. Ferner gibt die Kraftstoffsteuerung 152 ein Sollwert MLS für die Frischluftmenge vor. Dieser Sollwert entspricht der gewünschten Luftmenge, die zur Verbrennung der Kraftstoffmenge QK erforderlich ist. Die Abgasrückführsteuerung 154 steuert den Drosselklappensteller 130, das Abgasrückführventil 120 derart an, daß der Kraftstoff in der Brennkraftmaschine mit möglichst geringen Emissionen verbrennt.

In Figur 2 ist eine erste Ausgestaltung der erfindungsgemäßen Vorgehensweise dargestellt. Bereits in Figur 1 beschriebene Elemente sind mit entsprechenden Bezugszeichen bezeichnet. Das Ausgangssignal MLS der Sollwertvorgabe 152 gelangt mit positivem Vorzeichen zu einem Verknüpfungspunkt 220 sowie zu einem Kennfeld 226. Zum zweiten Eingang des Verknüpfungspunktes 220 gelangt mit negativen Vorzeichen das Signal MLI.

Der Verknüpfungspunkt 220 beaufschlagt einen Regler 225 mit einer Regelabweichung. Der Regler 225 besitzt vorzugsweise wenigstens integrierendes Verhalten. So kann beispielsweise ein PI- oder ein PID-Regler eingesetzt werden. Der Regler 225 beaufschlagt den Steller 120 mit dem Ansteuersignal AV. Das Kennfeld 226 beaufschlagt den Steller 130 mit dem Ansteuersignal AD.

Abhängig von der Regelabweichung zwischen dem Sollwert MLS und dem Istwert MLI für die benötigte Frischluftmenge berechnet der Regler 225 das Ansteuersignal für den Steller 120. Der Sollwert für die Solluftmenge gelangt ferner zu einem Kennfeld 226, das zusätzlich das Drehzahlsignal N verarbeitet. In dem Kennfeld 226 ist abhängig von der gewünschten Frischluftmenge und der Drehzahl N das Ansteuersignal AD für den Steller 130 abgelegt.

Der Regler 225 gibt ausgehend von dem Istwert MLI und dem Sollwert MLS ein Ansteuersignal AV für das erste Stellglied 120 vor. Die Steuerung 226 gibt ausgehend von wenigstens dem Sollwert MLS ein Ansteuersignal AD für das zweite Stellglied vor.

Das Kennfeld 226 in Verbindung mit dem Steller 130 dient als Vorsteuerung, die bei einer plötzlichen Änderung des Sollwertes MLS das Stellglied 130 schnell in seine neue Position bringt. Somit kann bei Änderungen des Sollwertes der neue Wert für die angesaugte Luftmenge durch Verstellen des Stellgliedes 130 schnell eingestellt werden. Verbleibende Abweichungen des tatsächlichen Wertes MLI vom Sollwert MLS werden vom Regler 225 durch Ansteuern des Stellers 120 ausgeglichen.

Vorteilhaft an dieser Ausgestaltung ist es, daß das dynamische Verhalten sehr gut ist, da der Steller 130 sehr schnell seine für die erforderliche Frischluftmenge nötige Stellung einnimmt. Ferner ist kein Integraler Anteil für die Steuerung 226 des Stellers 130 erforderlich, da der Steller 130 ein integrales Verhalten beinhaltet. Nachteilig ist es, daß sich Fehler im Kennfeld 226 negativ auf den Regelkreis auswirken.

Eine zweite Ausgestaltung ist in Figur 3 dargestellt. Der Sollwert MLS gelangt über ein Verknüpfungspunkt 230 zu einem Regler 235. Am zweiten Eingang des Verknüpfungspunktes 230 liegt mit negativen Vorzeichen der Istwert MLI an. Der Regler 235 beaufschlagt zum einen das erste Stellglied 120 mit einem Ansteuersignal AV. Ferner gelangt das Signal AV zu einer Steuerung 236, der ferner ein Signal N und ein Kraftstoffmengensignal QK zugeführt wird. Ausgehend von diesen Signalen liefert die Steuerung 236 ein Signal AD zur Beaufschlagung des zweiten Stellgliedes 130.

Abhängig von der Regelabweichung zwischen dem Soll- und dem Istwert für die Luftmenge berechnet der Regler 235 ein Signal zur Steuerung des Stellgliedes 120, das unmittelbar den Anteil an rückgeführtem Abgas bestimmt. Ausgehend von dem Ansteuersignal AV für das Stellglied 120 und weiteren Signalen wie der Drehzahl und/oder der Kraftstoffmenge QK, die ein Maß für die Last der Brennkraftmaschine darstellt, bestimmt die Steuerung 236 das Signal AD zur Beaufschlagung der Drosselklappe 130.

Der Regler 235 gibt ausgehend von dem Istwert MLI und dem Sollwert MLS ein Ansteuersignal AV für das erste Stellglied vor. Die Steuerung 236 gibt ausgehend von dem Ansteuersignal AV für das erste Stellglied und weiteren Größen, wie Drehzahl und Fahrpedalstellung, ein Ansteuersignal AD für das zweite Stellglied vor. Dies bedeutet die Vorsteuerung ist zusätzlich abhängig von dem Ansteuersignal AV für das erste Stellglied.

Diese Ausführungsform unterscheidet sich im wesentlichen von der Ausführungsform der Figur 2 darin, daß der Steuerung 236 das Ausgangssignal des Reglers 235 und nicht der Sollwert MLS zugeführt wird. Die übrigen Blöcke entsprechen sich im wesentlichen.

Vorteilhaft an dieser Ausgestaltung ist es, daß die Drosselklappe bei Änderungen der Betriebszustände sehr schnell ihre endgültige Stellung einnimmt. Dies wird durch die Steuerung 236 erreicht. Hierbei wird das Ausgangssignal zur Ansteuerung des Abgasrückführventils 120 berücksichtigt. Fehler im Steuerkennfeld wirken sich nur gering auf den Regler aus. Nachteilig ist, daß eine Temperaturkompensation bei dem elektropneumatischen Wandler 120 erforderlich ist.

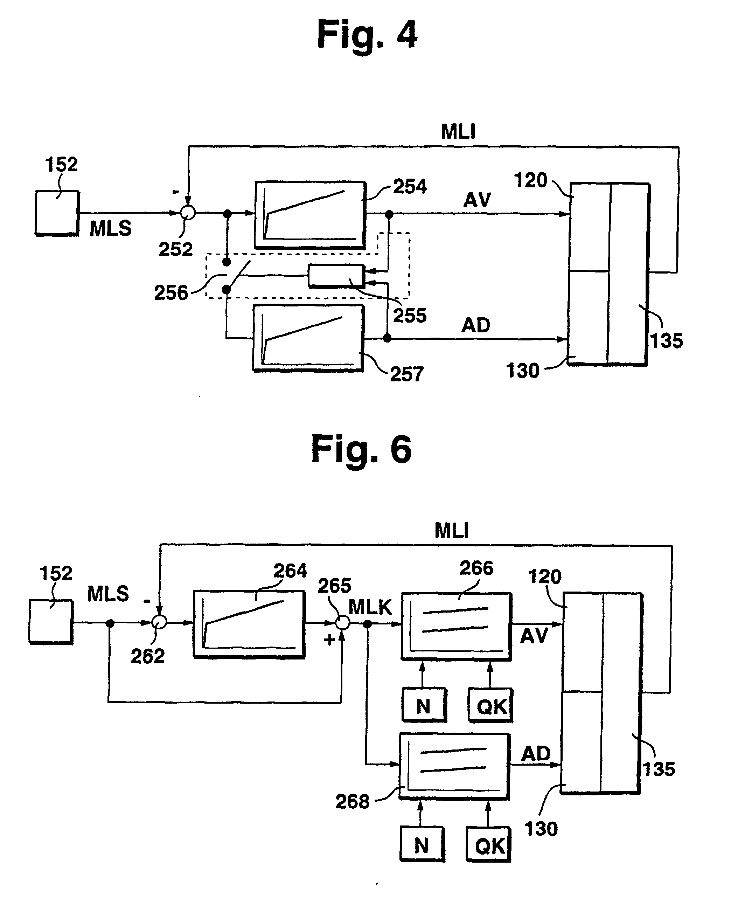

In Figur 4 ist eine weitere Ausgestaltung dargestellt. Das Signal MLS gelangt zu einem Verknüpfungspunkt 252, dem mit negativen Vorzeichen das Signal MLI zugeführt wird. Das Ausgangssignal des Verknüpfungspunktes 252 wird zum einen einem ersten Regler 254 und einem zweiten Regler 257 zugeleitet. Der erste Regler 254 beaufschlagt das erste Stellglied 120 mit einem Signal AV. Der zweite Regler 257 beaufschlagt das zweite Stellglied 130 mit einem Signal AD.

Bei einer Weiterbildung der Ausführungsform ist vorgesehen, daß das Ausgangssignal des Verknüpfungspunktes 252 über ein Schaltmittel 256 zu dem Regler 257 gelangt. Mittels einer Steuerung 255 ist das Schaltmittel 256 ansteuerbar. Die Steuerung 255 verarbeitet die Ausgangssignale AV des ersten Reglers 254 und das Ausgangssignal des zweiten Reglers 257.

Der Steller 130 wird zugeschaltet, wenn die gewünschte Abgasrückführrate mittels des Stellers 120 nicht alleine eingestellt werden kann. Dies wird dadurch erreicht, daß der Schalter 256 geschlossen wird, wenn das Ansteuersignal AV einen bestimmten Schwellwert übersteigt, Das bedeutet bei einem großen Anteil von rückgeführtem Abgas wird der Steller 130 aktiviert.

Der Schalter 256 wird wieder geöffnet, wenn das Ansteuersignal AD zu Null wird. Dies bedeutet, wenn die Drosselklappe 130 voll geöffnet ist und die gewünschte Menge an rückgeführtem Abgas alleine durch den Steller 120 erreicht wird.

Die Regelabweichung, die am Verknüpfungspunkt 252 ansteht, wird dem ersten und dem zweiten Regler zugeleitet. Der erste Regler steuert abhängig von der Regelabweichung das erste Stellglied 120 mit dem Signal AV an. Der zweite Regler 257 steuert ebenfalls abhängig von der Regelabweichung das zweite Stellglied 130 mit dem Ansteuersignal AD an. Bei dieser Ausfürungsform werden zwei parallele Regler verwendet.

Vorteilhaft bei dieser Ausgestaltung ist es, daß die Dynamik sehr gut ist. Da zwei Regler vorgesehen sind, werden die Positionen beider Stellglieder sehr genau eingestellt.

Nachteilig ist es, daß zwei Regler vorhanden sind, die Ausgangssignale abgeben. Dadurch sind Oszillationen des ersten Stellelements und des zweiten Stellgliedes möglich, die sich gegenseitig beeinflussen. Ferner ist ein erhöhter Aufwand aufgrund zweier Regler erforderlich.

Die Ausgestaltung, bei der der zweite Regler abgeschaltet werden kann, besitzt den Vorteil, daß immer nur ein Regler aktiv ist. Nachteilig ist es, daß immer nur ein Stellglied arbeitet, wenn das andere Stellglied seinen Endanschlag erreicht hat. Ferner treten es Instabilitäten auf, beim Umschalten von dem einen auf den anderen Regler.

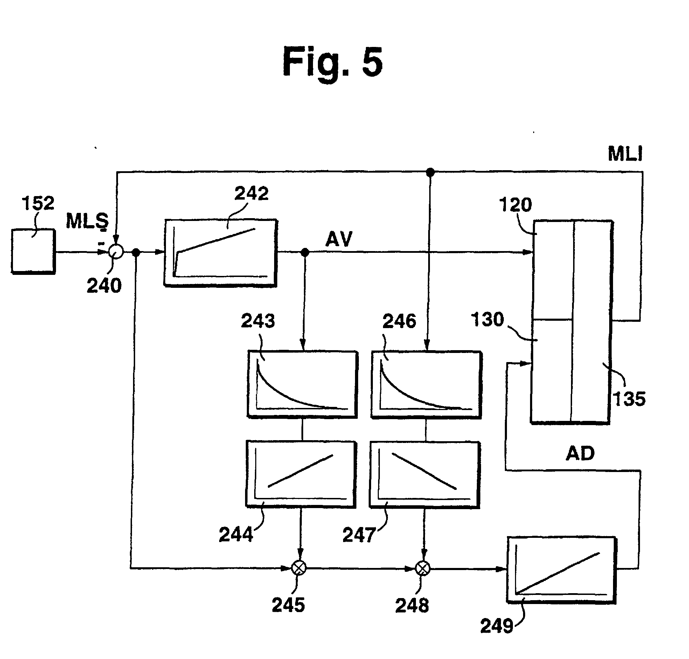

Eine weitere Ausgestaltung mit zwei Reglern ist in Figur 5 dargestellt. Einem Verknüpfungspunkt 240 wird der Sollwert MLS mit positiven und der Istwert MLI mit negativen Vorzeichen zugeleitet. Das Ausgangssignal des Verknüpfungspunktes gelangt zu einem ersten Regler 242 und über die Verknüpfungspunktes 245 und 248 zu einem zweiten Regler 249. Der erste Regler beaufschlagt das erste Stellglied 120 mit dem Ansteuersignal AV. Der zweite Regler 249 beaufschlagt das zweite Stellglied mit dem Ansteuersignal AD. Der zweite Regler 249 besitzt wenigstens ein integrierendes Verhalten. Er ist beispielsweise als PIoder als PID-Regler ausgebildet.

Im Verknüpfungspunkt 245 wird dem Ausgangssignal des Verknüpfungspunktes 240 das Ausgangssignal des Blockes 244 überlagert. Der Block 244 wird mit dem Ausgangssignal des Blockes 243 beaufschlagt, dem das Ausgangssignal AV des ersten Reglers 242 zugeleitet wird. Der Istwert MLI gelangt über einen Block 246 zu einem Block 247, der den Verknüpfungspunkt 248 mit einem Signal beaufschlagt.

Die Regelabweichung, die am Ausgang des Verknüpfungspunktes 240 anliegt entspricht der Abweichung zwischen der gewünschten Menge an Frischluft MLS und der tatsächlich zugeführten Frischluftmenge MLI, die beispielsweise mittels eines entsprechenden Sensors erfaßt wird.

Der erste Regler 242 bestimmt abhängig von der Regelabweichung das Ansteuersignal AV für das erste Stellglied. Der zweite Regler 249 bestimmt abhängig von der Regelabweichung das Ansteuersignal AD für das zweite Stellglied. Der Regler 249 besitzt zumindestens einen Integralen-Anteil.

Die Regelabweichung, die zum zweiten Regler 249 gelangt, kann mittels der Ausgangssignale der Blöcke 244 und 247 in den Verknüpfungspunkten 245 und 248 korrigiert werden. Diese Korrektur erfolgt zum einen abhängig vom Ausgangssignal des ersten Reglers 242 und zum anderen abhängig vom Istwert MLI. Die Blöcke 243 und 246 sind vorzugsweise als Differenzierer ausgestaltet. Die Blöcke 244 und 247 bestimmen ausgehend von dem differenzierten Signal AV bzw. dem differenzierten Signal MLI ein Korrekturfaktor, mit dem die Regelabweichung in den Verknüpfungspunkten 245 bzw. 248 korrigiert wird. Die Korrektur erfolgt vorzugsweise multiplikativ.

Mittels der Korrekturfaktoren werden unterschiedliche Einflußfaktoren auf den Drosselklappensteller berücksichtigt werden. Beispielsweise kann das Ausgangssignal AV des Regler 242 für den Abgasrückführsteller 120 zur dynamischen Unterstützung des Drosselklappensteller 130 verwendet werden. Dies bedeutet ändert sich das Signal AV sehr stark, so hat dies zur Folge, daß von den Blöcken 243 und 244 ein Korrekturfaktor gebildet wird, der das Signal AD derart beeinflußt, daß der Steller 130 den Steller 120 unterstützt.

Ferner ist ein Korrekturfaktor vorgesehen, der abhängig von der tatsächlich zugeführten Luftmenge MLI gebildet wird. Ändert sich beispielsweise die Luftmenge MLI nicht und liegt gleichzeitig eine Regelabweichung am Ausgang des Verknüpfungspunkt 240 an, so bilden die Blöcke 246 und 247 einen Korrekturfaktor, der die Drosselklappe 130 derart ansteuert, daß die Regelabweichung minimiert wird.

Vorteilhaft an dieser Ausgestaltung ist es, daß verschiedene Wichtungsmöglichkeiten zur Unterstützung der Abgasrückführung durch die Drosselklappe getrennt appliziert werden können.

In Figur 6 ist eine weitere Ausführungsform dargestellt. Einem Verknüpfungspunkt 262 wird der Sollwert MLS mit positiven und der Istwert MLI mit negativen Vorzeichen zugeführt. Das Ausgangssignal des Verknüpfungspunktes 262 gelangt als Regelabweichung zum Regler 264. Der Regler 264 ist vorzugsweise als PI-Regler ausgebildet. Zu einem Verknüpfungspunkt 265 gelangt zum einen das Ausgangssignal des Reglers 264 und der Sollwert MLS. Mit dem Ausgangssignal des MLK des Verknüpfungspunktes 265 wird zum einen ein Kennfeld 266 und ein Kennfeld 268 beaufschlagt, die wiederum das erste Stellglied 120 mit dem Signal AV und das zweite Stellglied 130 mit dem Signal AD beaufschlagen. Die Kennfelder 266 und 268 verarbeiten ferner ein Drehzahlsignal N und ein Signal bezüglich der eingespritzten Kraftstoffmenge QK.

Der Regler 264 gibt abhängig von der Regelabweichung ein Signal MLK vor. Diesem wird der Sollwert überlagert. Vorzugsweise erfolgt diese Überlagerung additiv. Dieser überlagerte Sollwert wirkt als Vorsteuerung. Dieses so korrigierte Ausgangssignal des Reglers 264 gelangt zu den beiden Kennfeldern 266 und 268.

Abhängig von der Regelabweichung bestimmt der Regler 264 ein Größe MLK, die abhängig vom Sollwert korrigiert wird. Ausgehend von dieser Größe MLK und weiteren Größen gibt jeweils ein Kennfeld 266, 268 die Ansteuersignale für das erste und zweite Stellglied.

Vorteilhaft bei dieser Ausgestaltung ist, daß jedem Steller ein Regler mit wenigstens PI-Verhalten zugeordnet ist. Damit ist eine genaue Einstellung der Luftmenge möglich. Aufgrund der Vorsteuerung durch die Aufschaltung des Sollwert MLS auf die Stellgröße MLK im Verknüpfungspunkt 265 ergibt sich ein gutes dynamisches Verhalten. Dies bedeutet das System reagiert sehr schnell auf sich ändernde Sollwerte.

## Patentansprüche

1. System zur Steuerung einer Brennkraftmaschine, mit einem ersten Steller (120) zur Beeinflussung der Menge an rückgeführtem Abgas, einem zweiten Steller (130) zur Beeinflussung wenigstens der der Brennkraftmaschine zugeführten Frischluftmenge, wobei wenigstens ein erster Regler ausgehend von dem Vergleich zwischen einem Sollwert (MLS) und einem Istwert (MLI) für die zugeführte Frischluftmenge, ein Ansteuersignal (AV) zur Beaufschlagung des ersten Stellers (120) und ein zweiter Regler oder eine Steuerung Ansteuersignale (AD) zur Beaufschlagung des zweiten Stellers (130) vorgeben.

2. System nach Anspruch 1, daß der erste Regler ausgehend von dem Istwert (MLI) und dem Sollwert (MLS) das Ansteuersignal (AV) für den ersten Steller (120) vorgibt und die Steuerung ausgehend von wenigstens dem Sollwert (MLS) das Ansteuersignal (AD) für den zweiten Steller vorgibt.

3. System nach einem der vorhergehenden Ansprüche, **dadurch gekennzeichnet, daß** der erste Regler ausgehend von dem Istwert (MLI) und dem Sollwert (MLS) ein Ansteuersignal (AV) für den ersten Steller (120) vorgibt und die Steuerung ausgehend von wenigstens dem Ansteuersignal (AV) für den ersten Steller (120) das Ansteuersignal (AD) für den zweiten Steller vorgibt.

4. System nach einem der vorhergehenden Ansprüche, daß der erste Regler ausgehend von dem Istwert (MLI) und dem Sollwert (MLS) das Ansteuersignal (AV) für den ersten Steller (120) vorgibt und der zweite Regler ausgehend von dem Istwert (MLI) und dem Sollwert (MLS) das Ansteuersignal (AD) für den zweiten Steller (130) vorgibt.

5. System nach Anspruch 4, daß das Eingangssignal des zweiten Reglers korrigierbar sind.

6. System nach einem der vorhergehenden Ansprüche, daß der erste Regler ausgehend von dem Istwert (MLI) und dem Sollwert (MLS) ein Signal vorgibt und eine erste Steuerung ausgehend von diesem Signal das Ansteuersignal (AV) für den ersten Steller (120) und eine zweite Steuerung ausgehend von diesem Signal das Ansteuersignal (AD) für den zweiten Steller (130) vorgibt.

7. System nach einem der vorhergehenden Ansprüche, **dadurch gekennzeichnet, daß** der erste Steller die Menge an rückgeführtem Abgas unmittelbar beeinflußt.

## Claims

1. System for controlling an internal combustion engine, having a first actuator (120) for influencing the quantity of fed-back exhaust gas, and a second actuator (130) for influencing at least the quantity of fresh air supplied to the internal combustion engine, at least a first regulator predefining, on the basis of the comparison between a set-point value (MLS) and an actual value (MLI) for the supplied quantity of fresh air, an actuation signal (AV) to be applied to the first actuator (120), and a second regulator or a controller predefining actuation signals (AD) to be applied to the second actuator (130).

2. System according to Claim 1, **characterized in that** the first regulator predefines the actuation signal (AV) for the first actuator (120) on the basis of the actual value (MLI) and the set-point value (MLS), and the controller predefines the actuation signal (AD) for the second actuator on the basis of at least the set-point value (MLS).

3. System according to one of the preceding claims, **characterized in that** the first regulator predefines an actuation signal (AV) for the first actuator (120) on the basis of the actual value (MLI) and the set-point value (MLS), and the controller predefines the actuation signal (AD) for the second actuator on the basis of at least the actuation signal (AV) for the first actuator (120).

4. System according to one of the preceding claims, **characterized in that** the first regulator predefines the actuation signal (AV) for the first actuator (120) on the basis of the actual value (MLI) and the set-point value (MLS), and the second regulator predefines the actuation signal (AD) for the second actuator (130) on the basis of the actual value (MLI) and the set-point value (MLS).

5. System according to Claim 4, **characterized in that** the input signal of the regulator can be corrected.

6. System according to one of the preceding claims, **characterized in that** the first regulator predefines a signal on the basis of the actual value (MLI) and the set-point value (MLS), and a first controller predefines the actuation signal (AV) for the first actuator (120) on the basis of this signal, and a second controller predefines the actuation signal (AD) for the second actuator (130) on the basis of this signal.

7. System according to one of the preceding claims, **characterized in that** the first actuator directly influences the quantity of fed-back exhaust gas.

## Revendications

1. Système de commande d'un moteur à combustion interne, comprenant un premier actionneur (120) pour influencer la quantité de recirculation de gaz d'échappement, un second actionneur (130) pour influencer au moins la quantité d'air frais alimentant le moteur, dans lequel au moins un premier régulateur, partant de la comparaison entre une valeur de consigne (MLS) et une valeur réelle (MLI) de la quantité d'air frais fournie, prédétermine un signal de commande (AV) pour alimenter le premier actionneur (120) et un second régulateur ou une commande de signaux de commande (AD) destiné au second actionneur (130).

2. Système selon la revendication 1,
**caractérisé en ce que**
partant de la valeur réelle (MLI) et de valeur de consigne (MLS), le régulateur prédétermine le signal de commande (AV) du premier actionneur (120) et partant au moins de la valeur de consigne (MLS), la commande prédétermine le signal de commande (AD) du second actionneur.

3. Système selon l'une quelconque des revendications précédentes,
**caractérisé en ce que**
partant de la valeur réelle (MLI) et de la valeur de consigne (MLS), le premier régulateur prédétermine un signal de commande (AV) du premier actionneur (120) et partant au moins du signal de commande (AV) du premier actionneur (120), la commande prédétermine le signal de commande (AD) du second actionneur.

4. Système selon l'une quelconque des revendications précédentes,
**caractérisé en ce que**
partant de la valeur réelle (MLI) et de la valeur de consigne (MLS), le premier régulateur prédétermine le signal de commande (AV) du premier actionneur (120) et partant de la valeur réelle (MLI) et de la valeur de consigne (MLS), le second régulateur prédétermine le signal de commande (AD) du second actionneur (130).

5. Système selon la revendication 4,
**caractérisé en ce que**
le signal d'entrée du second régulateur peut être corrigé.

6. Système selon l'une quelconque des revendications précédentes,
**caractérisé en ce que**
partant de la valeur réelle (MLI) et de la valeur de consigne (MLS), un premier régulateur prédétermine un signal et partant de ce signal, une première commande prédétermine le signal de commande (AV) du premier actionneur (120) et une seconde commande, partant de ce signal, prédétermine le signal de commande (AD) du second actionneur (130).

7. Système selon l'une quelconque des revendications précédentes,
**caractérisé en ce que**
le premier actionneur influence directement la quantité de gaz d'échappement recyclés.
